# EUROPEAN PATENT APPLICATION

(11) **EP 4 708 790 A1**
(43) Date of publication of application: **11.03.2026**
(21) Application number: 24212729.8
(22) Date of filing: 13.11.2024
(51) Int. Cl.: H04L 25/03

(54) **A RECEIVER CIRCUIT**

(30) Priority: 06.09.2024 IN 202441067624
(71) Applicant: NXP USA, Inc., Austin, TX 78735 (US)
(72) Inventor: Ramanolla, Dileep, 5656 AG Eindhoven (NL); Poreddy, Uma Maheswara Reddy, 5656 AG Eindhoven (NL); Dubey, Shivesh Kumar, 5656 AG Eindhoven (NL)
(74) Representative: Schmütz, Christian Klaus Johannes

(57) **Abstract**

A receiver circuit that comprises a plurality of decision feedback equalizer sub-circuits, each associated with one of a plurality of divided clock signals. Each decision feedback equalizer sub-circuit is configured to receive PAM signalling that represents a current network symbol. Each one of the plurality of decision feedback equalizer sub-circuits is configured for sequential generation of an output symbol, and comprises: a first delay block that is configured to apply a delay to the PAM signalling in order to provide delayed PAM signalling, wherein the first delay block is clocked by the divided clock signal that is associated with the decision feedback equalizer sub-circuit; a coefficient application block; a slicer; and a second delay block that is configured to apply a delay to a DFE-sub-circuit output symbol from the slicer in order to provide an output symbol, wherein the second delay block is clocked by the divided clock signal that is associated with the decision feedback equalizer sub-circuit.

## Description

### Field

The present disclosure relates to receiver circuits for processing pulse amplitude modulation, PAM, signalling.

### Summary

According to a first aspect of the present disclosure there is provided a receiver circuit for processing pulse amplitude modulation, PAM, signalling that represents a stream of network symbols, wherein the receiver circuit is configured to receive:
a network clock signal which corresponds to a network frequency; and
a plurality of divided clock signals, wherein:
   each divided clock signal defines the same divided frequency as each other divided clock signal, wherein the divided frequency is an integer multiple of the network frequency, and
   each of the plurality of divided clock signals are phase offset with respect to each of the other divided clock frequencies, such that the rising edges of each of the plurality of divided clock signals are evenly spaced apart from the rising edges of each other divided clock signal;
wherein the receiver circuit comprises:
a receiver output terminal; and
a plurality of decision feedback equalizer sub-circuits, each associated with one of the divided clock signals, wherein:
   each decision feedback equalizer sub-circuit is configured to receive the PAM signalling that represents a current network symbol;
   each one of the plurality of decision feedback equalizer sub-circuits is configured for sequential generation of an output symbol;
   each of the decision feedback equalizer sub-circuit comprises:
      a first delay block that is configured to apply a delay to the PAM signalling in order to provide delayed PAM signalling, wherein the first delay block is clocked by the divided clock signal that is associated with the decision feedback equalizer sub-circuit;
      a coefficient application block that is configured to apply a plurality of coefficients to the delayed PAM signalling in order to provide processed PAM signalling, wherein each coefficient is based on one or more of a plurality of preceding output symbol values as provided by the sequence of decision feedback equalizer sub-circuits;
      a slicer configured to apply one or more thresholds to the processed PAM signalling in order to provide a DFE-sub-circuit output symbol; and
      a second delay block that is configured to apply a delay to the DFE-sub-circuit output symbol in order to provide an output symbol, wherein the second delay block is clocked by the divided clock signal that is associated with the decision feedback equalizer sub-circuit; and
   a switching circuit that is configured to sequentially provide the output symbols that have been generated by each of the decision feedback equalizer sub-circuits as a stream of output symbols at the receiver output terminal.

Such a receiver circuit can improve / increase the frequency of PAM signal processing (higher baud rates of link).

In one or more embodiments, each one of the plurality of decision feedback equalizer sub-circuits is clocked by a different one of the plurality of divided clock signals, and only one of the divided clock signals.

In one or more embodiments, the slicer is clocked by the divided clock signal that is associated with the decision feedback equalizer sub-circuit.

In one or more embodiments, the slicer is operational at an integer fraction of the frequency of the network frequency. The integer may correspond to the number of divided clock signals.

In one or more embodiments, each decision feedback equalizer sub-circuit comprises a plurality of speculative circuits.

In one or more embodiments, each decision feedback equalizer sub-circuit is configured to:
generate a set of provisional output symbols based on the PAM signalling that represents the current network symbol; wherein each one of the set of provisional output symbols corresponds to a prospective value of the output symbol for a different value of the immediately preceding output symbol;
use the immediately preceding output symbol, which was generated by the preceding adaptive filtering circuit in the sequence, to generate the output symbol.

In one or more embodiments,:
each decision feedback equalizer sub-circuit comprises a plurality of processing branches, one for each of the possible values of an output symbol;
each processing branch applies a coefficient value that is associated with a different value for the immediately preceding output symbol to the delayed PAM signalling that is received from the first delay block in order to provide prospective processed PAM signalling;
each processing branch comprises a slicer that is configured to apply one or more thresholds to the prospective processed PAM signalling in order to provide the provisional output symbol for that branch.

In one or more embodiments, the receiver circuit is configured to extract the network clock signal from the received PAM signalling.

In one or more embodiments, the receiver circuit is configured to generate the divided clock signals from the network clock signal.

In one or more embodiments, the slicer of each decision feedback equalizer sub-circuit is configured to selectively apply one, two or three thresholds in order to respectively process PAM-2, PAM-3 or PAM-4 signalling.

In one or more embodiments, the switching circuit is a multiplexer.

There is also disclosed a wireline transceiver comprising any receiver circuit disclosed herein.

There is also disclosed an ethernet transceiver comprising any receiver circuit disclosed herein.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example of different PAM modulation levels;
Figure 2 shows a receiver circuit for processing PAM signalling;
Figure 3 shows an example structure of a digital equaliser for M-ary PAM transceivers;
Figure 4 shows an alternative implementation of the DFE of Figure 3;
Figure 5 shows an example of a receiver circuit according to the present disclosure;
Figure 6 shows an example of divided clock signals according to the present disclosure;
Figure 7 shows another example of a receiver circuit according to the present disclosure; and
Figure 8 shows yet another example of a receiver circuit according to the present disclosure.

### Detailed Description

Pulse amplitude modulation (PAM) is a method of encoding data within a signal wherein the amplitude of a pulse is varied, within a known time frame, to represent a data symbol. To provide a simple example, a pulse with a low amplitude could represent a zero and a pulse with a high amplitude could represent a one. The time frame allocated to each data symbol is constant so that a receiver can understand which pulse represents which symbol in a message.

PAM symbols may represent a wider variety of data than simply zero and one. By implementing different numbers of thresholds, a device can distinguish between different numbers of data symbols that could be represented by a pulse.

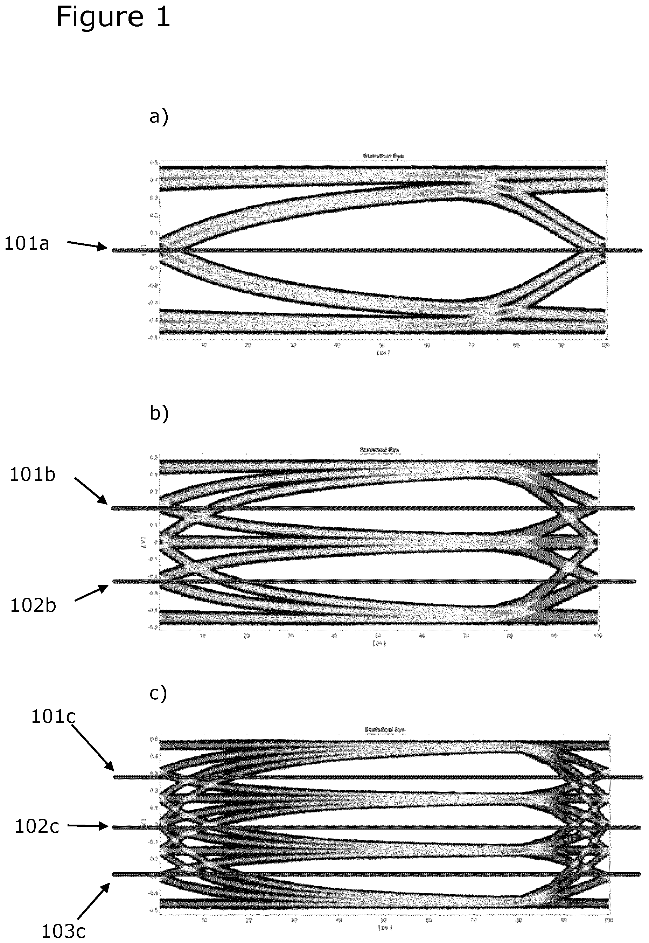

Figure 1 shows an example of different PAM modulation levels. Figure 1a) shows two-level PAM modulation (PAM-2), Figure 1b) shows three-level PAM modulation (PAM-3) and Figure 1c) shows four-level PAM modulation (PAM-4).

A data symbol according to PAM-2 can represent two different values, such that one threshold 101a is required to distinguish between the two different values (a first value when the level is above the threshold 101a, and a second value when the level is below the threshold 101a).

A data symbol according to PAM-3 can represent three different values, such that two different thresholds 101b, 102b are required to distinguish between the three different values. These thresholds are a high-threshold and a low-threshold. The symbol can have: a first value when the level is above the high-threshold 101b, a second value when the level is between the high-threshold 101b and the low-threshold 102b, and a third value when the level is below the low-threshold 102b.

A data symbol according to PAM-4 can represent four different values, such that three different thresholds 101c, 102c, 103c are required to distinguish between the three different values. These thresholds are a high-threshold, a medium-threshold and a low-threshold. The symbol can have: a first value when the level is above the high-threshold 101c; a second value when the level is between the high-threshold 101c and the middle-threshold 102c; a third value when the level is between the middle-threshold 102c and the low-threshold 103c; and a fourth value when the level is below the low-threshold 102c. It will be appreciated that this pattern can continue for all PAM modulation levels higher than four.

A slicer can be used to apply the one or more PAM thresholds to received PAM signalling in order to determine the value of an output symbol.

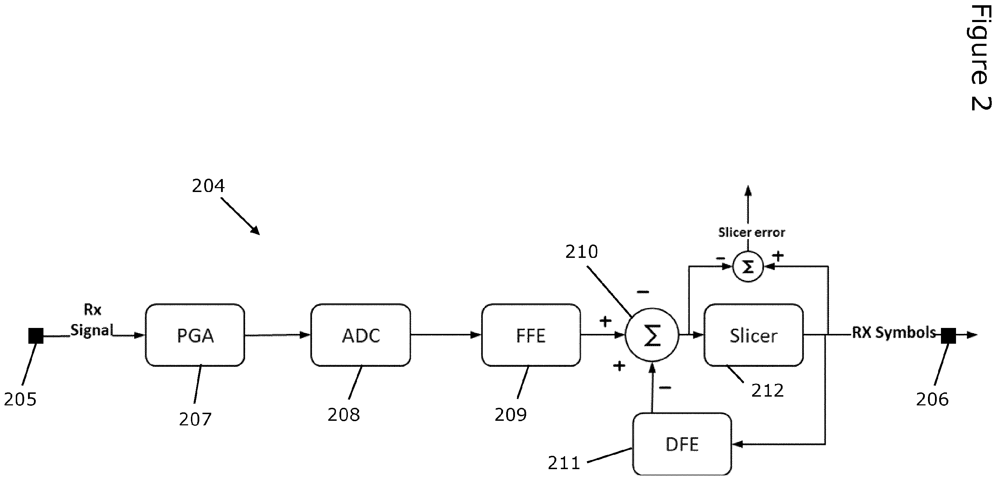

Figure 2 shows a receiver circuit 204 for processing PAM signalling, which can be used within an ethernet network for example. The receiver circuit 204 includes a receiver input terminal 205 and a receiver output terminal 206. The receiver input terminal 205 receives PAM network signalling. The receiver output terminal 206 provides output symbols.

The received PAM network signalling is processed by the following components in turn: a programmable gain amplifier (PGA) 207, an analogue-to-digital converter (ADC) 208 and a feedforward equalizer (FFE) 209. As is known in the art, the FFE 209 can reduce inter-symbol interference.

The output terminal of the FFE 209 is connected to a first input terminal of a summation component 210. The output terminal of a decision feedback equalizer (DFE) 211 is connected to a second input terminal of the summation component 210. The summation component 210 subtracts the output signal of the DFE 211 from the output signal of the FFE 209 in order to provide a signal to a slicer 212. The slicer applies one or more PAM thresholds to the signal that it receives from the summation component 210 (as discussed above), such that it provides a stream of output symbols to the receiver output terminal 206. As shown in Figure 2, the stream of output symbols is also provided as an input signal to the DFE 211.

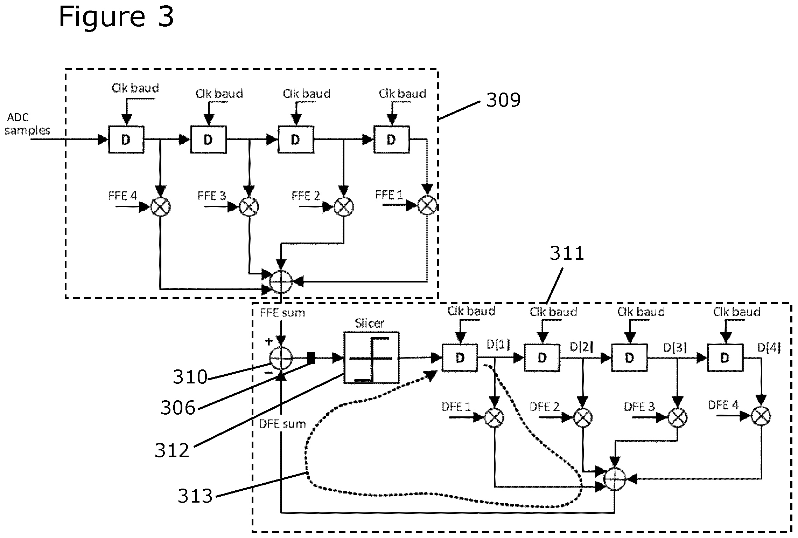

Figure 3 shows an example structure of a digital equaliser for M-ary PAM transceivers. Features of Figure 3 that are also shown in Figure 2 have been given corresponding reference numbers in the 300 series.

The DFE 311 in Figure 3 has multiple taps, each of which provides a part of the DFE feedback signal (which is labelled as DFE sum is Figure 3) that is provided to the summation component 310 for subtracting from the signal labelled as FFE sum. Each tap applies a coefficient (DFE 1, DFE 2, DFE 3, etc.) to a delayed version of the output symbols that are provided by the receiver output terminal 306. In this way, the DFE 311 can be considered as applying a plurality of coefficients based on one or more of a plurality of preceding output symbol values; that is, applying the result of multiplying a coefficient value (e.g., DFE 1) by an earlier preceding output symbol (e.g., D[1], which is the immediately preceding output symbol that is provided as a result of applying a single delay to the output symbols that are provided to the receiver output terminal 306).

As can be seen in Figure 3, the DFE first tap output signal (the result of multiplying DFE 1 and D[1]) feeds back to the input terminal of the slicer 312, whose output is the input to first DFE tap. This path is identified as a dashed line in Figure 3 and has been labelled with reference 313. This is the timing critical path of the DFE 311, which is closed in one clock cycle of Ghz baud frequencies.

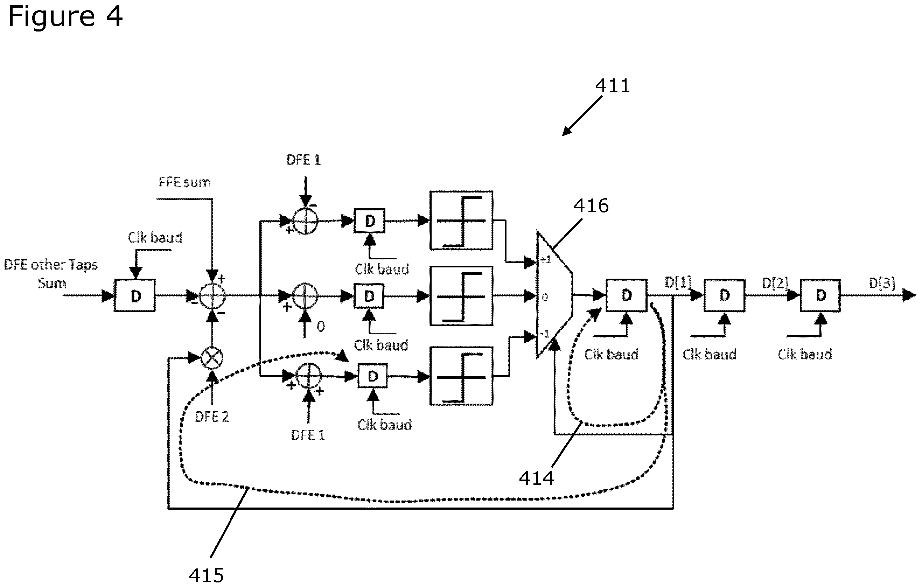

Figure 4 shows an alternative implementation of the DFE of Figure 3. This implementation can be considered as providing a single stage look ahead.

The single stage look ahead (which can also be referred to as a predictive DFE or as including speculative circuits) pre-calculates all possible combinations of DFE tap 1, in order to reduce the problem of critical path timing that is described above with reference to Figure 3.

The DFE 411 in Figure 4 is for processing PAM-3 signalling. In this way, an output symbol can have a value of +1, 0 or -1. When each of these potential output symbol values is multiplied by DFE 1, the result will either be '+DFE 1', '0' or '-DFE 1'. In Figure 4 a separate processing branch is provided for applying each one of these coefficient values, and the result is provided to a slicer for determining a provisional output symbol. These provisional output symbols are each provided to an input terminal of a multiplexer 416. The select terminal of the multiplexer 416 receives the immediately preceding output symbol (D[1]) to select the provisional output symbol that is associated with the actual value of the immediately preceding output symbol. In this way, the time it takes to apply the coefficient in the first DFE tap is shortened, as represented by the dashed line 414 in Figure 4, which is quicker than the corresponding path 313 in Figure 3. In other words, the calculation circuit (or digital circuit) is reduced, which is beneficial for in higher clock speed operation (higher baud rates of PAM communication).

However, the calculation with the second DFE tap, along with the DFE tap1 look ahead calculation will then get into timing critical path. This is represented by the dashed line that is labelled with reference 415 in Figure 4.

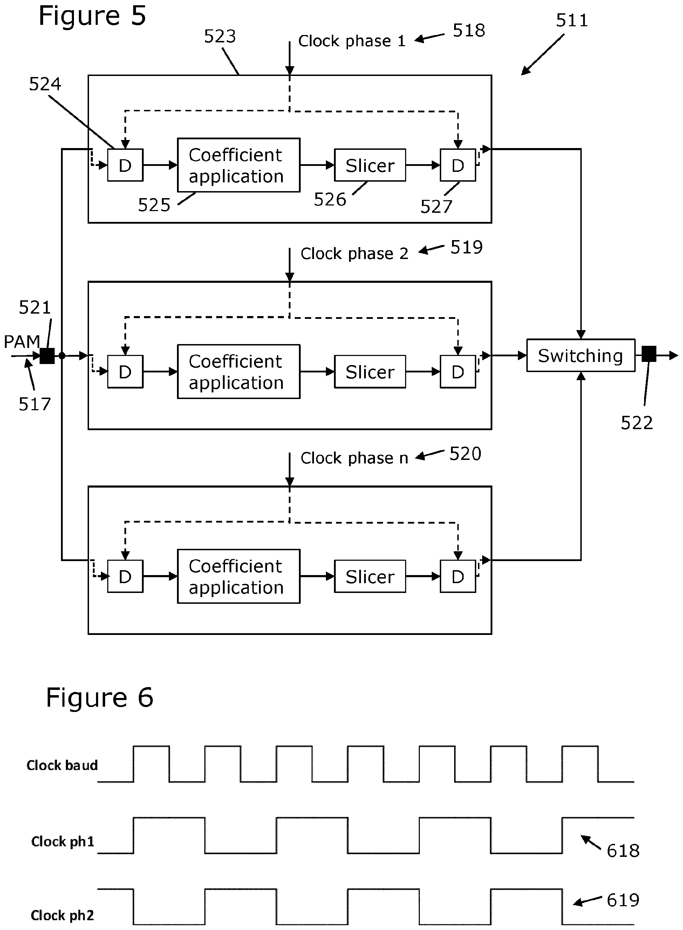

Figure 5 shows an example of a receiver circuit 511 according to the present disclosure. More particularly, Figure 5 shows a DFE circuit for processing pulse amplitude modulation, PAM, signalling 517 that represents a stream of network symbols (i.e., the actual values of the symbols that were transmitted to the receiver circuit 511). As will be appreciated from the earlier description, the PAM signalling 517 has already been processed before it is received by the receiver circuit 511 shown in Figure 5. The FFE and DFE are used for adaptive equalisation of the channel used for PAM signal reception.

The receiver circuit 511 receives a network clock signal (not shown) which corresponds to a network frequency. In some examples, this can be extracted from the PAM signalling by the receiver circuit itself, and it can be referred to as a baud clock. The receiver circuit 511 also receives a plurality of divided clock signals 518, 519, 520. Each divided clock signal 518, 519, 520 defines the same divided frequency as each other divided clock signal, and the divided frequency is an integer multiple of the network frequency. The receiver circuit 511 can generate the divided clock signals itself from the network clock signal.

In this example, there are three divided clock signals 518, 519, 520, and therefore the frequency of each divided clock signal 518, 519, 520 is one third of the network frequency. Furthermore, each of the plurality of divided clock signals 518, 519, 520 are phase offset with respect to each of the other divided clock frequencies 518, 519, 520 such that the rising edges of each of the plurality of divided clock signals 518, 519, 520 are evenly spaced apart from the rising edges of each other divided clock signal 518, 519, 520.

Figure 6 shows an example of divided clock signals 618, 619 for a receiver circuit that processes only two divided clock signals, and the associated network clock signal (clock baud).

Returning to Figure 5, the receiver circuit 511 has an input terminal 521 that receives the pulse amplitude modulation, PAM, signalling 517. The receiver circuit 511 also has a receiver output terminal 522 that provides a stream of output symbols.

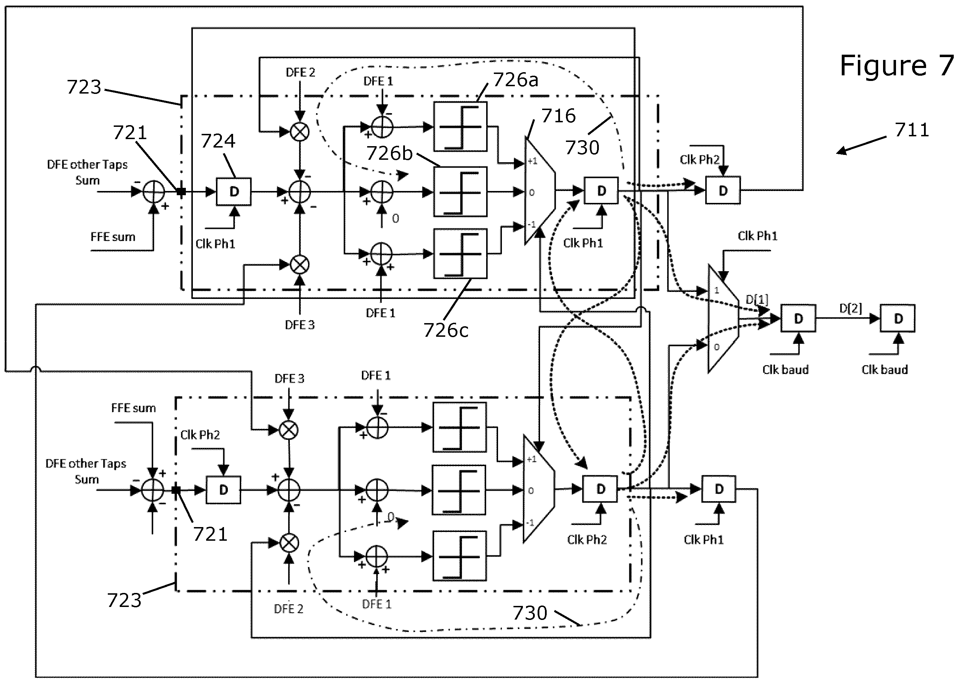

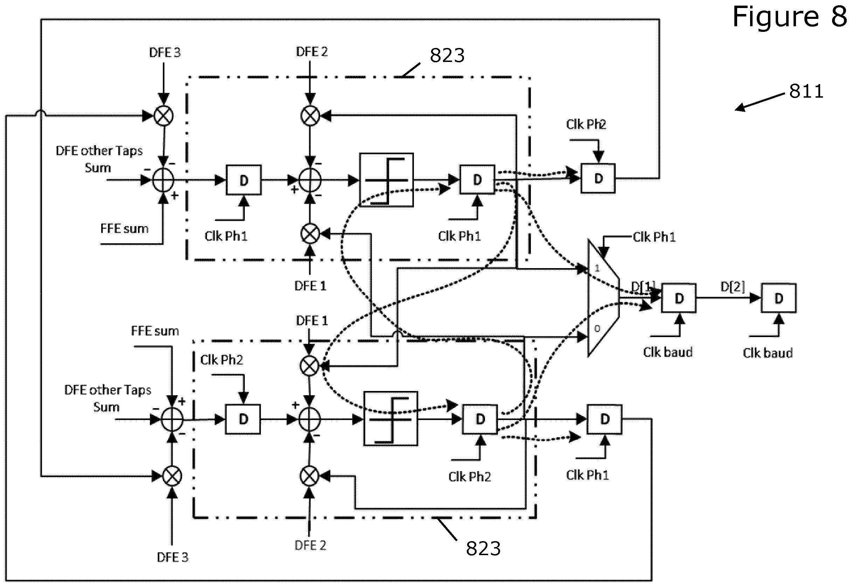

The receiver circuit 511 includes a plurality of decision feedback equalizer sub-circuits 523, one for each of the divided clock signals 518, 519, 520. In this example, three decision feedback equalizer sub-circuits 523 are shown. In the examples that are described below with reference to Figure 7 and 8, there are two decision feedback equalizer sub-circuits. It will be appreciated that receiver circuits disclosed herein can generally include two or more decision feedback equalizer sub-circuits.

Each decision feedback equalizer sub-circuit 523 is configured to receive the PAM signalling that represents a current network symbol (at times, we will refer to a current network symbol as 'n', and earlier output symbols as 'n-1', n-2', etc.). Each one of the plurality of decision feedback equalizer sub-circuits 523 is configured for sequential generation of an output symbol. That is, each of the plurality of decision feedback equalizer sub-circuits 523 generates an output symbol in turn, such that the generated output symbols can be sequentially provided to the receiver output terminal 522, one after the other, in order to provide the stream of output symbols at the receiver output terminal 522. This will be discussed in more detail below.

Each of the decision feedback equalizer sub-circuits 523 includes a first delay block 524, a coefficient application block 525, a slicer, 526 and a second delay block 527.

The first delay block 524 applies a delay to the received PAM signalling 517 in order to provide delayed PAM signalling. The first delay block 524 is clocked by the divided clock signal that is associated with the decision feedback equalizer sub-circuit 523. In Figure 5: the upper decision feedback equalizer sub-circuit 523 is clocked by clock phase 1 518; the middle decision feedback equalizer sub-circuit is clocked by clock phase 2 519, etc. As will be discussed below, the PAM output symbols that are generated by the first and second decision feedback equalizer sub-circuits 523 (those clocked by clock phase 1 518 and clock phase 2 519) are used to estimate the PAM output symbols of the third decision feedback equalizer sub-circuit (the one clocked by clock phase n 520), and *vice versa* in circular or round robin fashion. We have not included lines in Figure 5 to represent the exchange of previous output symbols between the decision feedback equalizer sub-circuits 523 in order not to obstruct the other features of Figure 5. In the examples of Figures 7 and 8, which only have two decision feedback equalizer sub-circuits, we have included lines to illustrate the exchange of previous output symbols between the decision feedback equalizer sub-circuits.

The coefficient application block 525 is configured to apply a plurality of coefficients to the delayed PAM signalling in order to provide processed PAM signalling. As will be discussed in more detail below, each coefficient is based on one of a plurality of preceding output symbol values as provided by the sequence of decision feedback equalizer sub-circuits 523. That is, because the plurality of decision feedback equalizer sub-circuits 523 provide the output symbols sequentially in turn, the output symbols of the other decision feedback equalizer sub-circuits 523 are used to implement the functionality of the DFE taps that utilise the earlier output symbol values. By way of example, where there are two decision feedback equalizer sub-circuits, odd ones of the plurality of preceding output symbols (n-1, n-3, etc.) are provided by the other sub-circuit, and even ones of the plurality of preceding output symbols are provided by the sub-circuit in question.

The slicer 526 applies one or more thresholds to the processed PAM signalling in order to provide a DFE-sub-circuit output symbol. As discussed above with reference to Figure 1, the number of thresholds that are applied depends on the number of different PAM modulation levels that are being used. In some examples, the slicer 526 of each decision feedback equalizer sub-circuit can selectively apply one, two or three thresholds in order to respectively process PAM-2, PAM-3 or PAM-4 signalling. In this way, the same circuit can be used to process different types of PAM signalling.

The second delay block 527 applies a delay to the DFE-sub-circuit output symbol in order to provide an output symbol. The second delay block 527 is clocked by the divided clock signal that is associated with the decision feedback equalizer sub-circuit. That is, the first and the second delay blocks 524, 527 in each decision feedback equalizer sub-circuit 523 are clocked by the same divided clock signal. This is important because it means that each decision feedback equalizer sub-circuit 523 operates at a fraction of the network / baud frequency. Advantageously, this can greatly reduce the timing critical path of the receiver circuit 511 and therefore improve the performance of the receiver circuit 511. More particularly, this can improve / increase the frequency of PAM signal processing (higher baud rates of link).

Finally, with reference to Figure 5, the receiver circuit 511 includes a switching circuit 522 that sequentially provides the output symbols that have been generated by each of the decision feedback equalizer sub-circuits 523 as the stream of output symbols at the receiver output terminal 522. In the examples that follow, the functionality of the switching circuit 522 is implemented as a multiplexer. However, it will be appreciated that any implementation can be used that sequentially passes the output symbols that have been generated by the individual decision feedback equalizer sub-circuits 523 to the receiver output terminal 522.

It will be appreciated from the description of Figure 5 that each one of the plurality of decision feedback equalizer sub-circuits 523 is clocked by a different one of the plurality of divided clock signals 518, 519, 520, and is clocked by only one of the divided clock signals 518, 519, 520.

Figure 7 shows another example of a receiver circuit 711 according to the present disclosure. Features of Figure 7 that are also shown in Figure 5 have been given corresponding reference numbers in the 700 series. The example of Figure 7 can be considered as using a multi-baud cycle along with one-stage look ahead. This one-stage look ahead, which can also be referred to as using speculative circuits, is similar to the processing that is described above with reference to Figure 4.

Each decision feedback equalizer sub-circuit 723 in Figure 7 includes a speculative circuit. The speculative circuit has a plurality of processing branches, one for each of the possible values of an output symbol. Each processing branch applies a coefficient value that is associated with a different value for the immediately preceding output symbol (i.e., '+DFE 1', '0', or '-DFE 1') to the delayed PAM signalling that is received from the first delay block 724 in order to provide prospective processed PAM signalling. The prospective PAM signalling in each branch is then provided to a slicer 726a, 726b, 726c for determining a provisional output symbol for that branch. These provisional output symbols are each provided to an input terminal of a multiplexer 716. The select terminal of the multiplexer 716 receives the immediately preceding output symbol (D[1]) from the immediately preceding decision feedback equalizer sub-circuit 723 in the sequence.

In this way, the speculative circuit in each decision feedback equalizer sub-circuit 723 is configured to generate a set of provisional output symbols (the outputs of the three slicers 726a, 726b, 726c) based on the PAM signalling that represents a current network symbol; wherein each one of the set of provisional output symbols corresponds to a prospective value of the current output symbol, n, for a different value of the immediately preceding output symbol, n-1 (i.e., after application of a coefficient that is associated with each of the possible values of the immediately preceding output symbol, n-1). The speculative circuit is also configured to use the immediately preceding output symbol, n-1, which was generated by the immediately preceding adaptive filtering circuit in the sequence, to generate the current output symbol, n.

In the example of Figure 7, there are two decision feedback equalizer sub-circuits 723. Therefore, there are also two divided clock signals, which are labelled as Clk ph1 and Clk ph2 in Figure 7. These divided clock signals are divided versions of the baud clock, and have a 180 degree phase difference with respect to each other. In fact, the divided clock signals that are used by the receiver circuit 711 of Figure 7 are those that are shown in Figure 6.

Beneficially, the arrangement of Figure 7 will resolve the timing critical path to two baud cycles. This represents a significant improvement over the circuit of Figure 3, where the timing critical path is one baud cycle.

In the figure, the dashed timing arcs are at baud rate, and the dot-dashed timing arcs 730 are at half the baud rate. It can be seen from Figure 7 that beneficially the timing arcs 730 that are contained with each decision feedback equalizer sub-circuit 723 are at half baud rate. This means that the speculative circuits, including the slicers 726a, 726b, 726c work at half the frequency of baud rate, in the same way that is described above with reference to Figure 5.

Figure 8 shows yet another example of a receiver circuit 811 according to the present disclosure. The example of Figure 8 can be considered as using a multi-baud cycle without the one-stage look ahead of Figure 7.

As can be seen from Figure 8, the first and the second delay blocks in each decision feedback equalizer sub-circuit 823 are clocked by the same divided clock signal. Again, advantageously this enables each decision feedback equalizer sub-circuit 823 to operate at a fraction of the network / baud frequency. It also resolves the timing critical path for achieving high frequency pam signal processing.

It will be appreciated that even though the examples of Figures 7 and 8 use divided-by-two baud clocks, it can also be extended for divide by N(3,4,..). Also, examples disclosed herein can used with any wireline transceiver using any PAM-N scheme. Furthermore, examples disclosed herein can be used along with a digital echo canceller for different versions of ethernet transceivers.

One or more of the examples disclosed herein can be used to implement a high speed adaptive digital equaliser for ethernet transceivers (or any high speed ethernet transceivers).

Some of the examples disclosed herein relate to use of multi baud cycles along with look ahead (speculative) DFE loop unrolling for resolving timing critical path at the slicer for high-speed PAM-N transceivers. This can resolve timing critical path for PAM-N applications with high baud rate. It can also achieve the effect of two stage look ahead without using a high hardware requirement that would otherwise be required for two stage look ahead.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A receiver circuit for processing pulse amplitude modulation, PAM, signalling that represents a stream of network symbols, wherein the receiver circuit is configured to receive:
a network clock signal which corresponds to a network frequency; and
a plurality of divided clock signals, wherein:
each divided clock signal defines the same divided frequency as each other divided clock signal, wherein the divided frequency is an integer multiple of the network frequency, and
each of the plurality of divided clock signals are phase offset with respect to each of the other divided clock frequencies, such that the rising edges of each of the plurality of divided clock signals are evenly spaced apart from the rising edges of each other divided clock signal;
wherein the receiver circuit comprises:
a receiver output terminal; and
a plurality of decision feedback equalizer sub-circuits, each associated with one of the divided clock signals, wherein:
each decision feedback equalizer sub-circuit is configured to receive the PAM signalling that represents a current network symbol;
each one of the plurality of decision feedback equalizer sub-circuits is configured for sequential generation of an output symbol;
each of the decision feedback equalizer sub-circuit comprises:
a first delay block that is configured to apply a delay to the PAM signalling in order to provide delayed PAM signalling, wherein the first delay block is clocked by the divided clock signal that is associated with the decision feedback equalizer sub-circuit;
a coefficient application block that is configured to apply a plurality of coefficients to the delayed PAM signalling in order to provide processed PAM signalling, wherein each coefficient is based on one or more of a plurality of preceding output symbol values as provided by the sequence of decision feedback equalizer sub-circuits;
a slicer configured to apply one or more thresholds to the processed PAM signalling in order to provide a DFE-sub-circuit output symbol; and
a second delay block that is configured to apply a delay to the DFE-sub-circuit output symbol in order to provide an output symbol, wherein the second delay block is clocked by the divided clock signal that is associated with the decision feedback equalizer sub-circuit; and
a switching circuit that is configured to sequentially provide the output symbols that have been generated by each of the decision feedback equalizer sub-circuits as a stream of output symbols at the receiver output terminal.

2. The receiver circuit of claim 1, wherein each one of the plurality of decision feedback equalizer sub-circuits is clocked by a different one of the plurality of divided clock signals, and only one of the divided clock signals.

3. The receiver circuit of claim 1 or claim 2, wherein the slicer is clocked by the divided clock signal that is associated with the decision feedback equalizer sub-circuit.

4. The receiver circuit of claim 3, wherein the slicer is operational at an integer fraction of the frequency of the network frequency, wherein the integer corresponds to the number of divided clock signals.

5. The receiver circuit of any preceding claim, wherein each decision feedback equalizer sub-circuit comprises a plurality of speculative circuits.

6. The receiver circuit of any preceding claim, wherein each decision feedback equalizer sub-circuit is configured to:
generate a set of provisional output symbols based on the PAM signalling that represents the current network symbol; wherein each one of the set of provisional output symbols corresponds to a prospective value of the output symbol for a different value of the immediately preceding output symbol;
use the immediately preceding output symbol, which was generated by the preceding adaptive filtering circuit in the sequence, to generate the output symbol.

7. The receiver circuit of claim 6, wherein:
each decision feedback equalizer sub-circuit comprises a plurality of processing branches, one for each of the possible values of an output symbol;
each processing branch applies a coefficient value that is associated with a different value for the immediately preceding output symbol to the delayed PAM signalling that is received from the first delay block in order to provide prospective processed PAM signalling;
each processing branch comprises a slicer that is configured to apply one or more thresholds to the prospective processed PAM signalling in order to provide the provisional output symbol for that branch.

8. The receiver circuit of any preceding claim, wherein the receiver circuit is configured to extract the network clock signal from the received PAM signalling.

9. The receiver circuit of any preceding claim, wherein the receiver circuit is configured to generate the divided clock signals from the network clock signal.

10. The receiver circuit of any preceding claim, wherein the slicer of each decision feedback equalizer sub-circuit is configured to selectively apply one, two or three thresholds in order to respectively process PAM-2, PAM-3 or PAM-4 signalling.

11. The receiver circuit of any preceding claim, wherein the switching circuit is a multiplexer.

12. A wireline transceiver comprising the receiver circuit of any preceding claim.

13. The wireline transceiver of clam 12, wherein the wireline transceiver is an ethernet transceiver.
